# EUROPÄISCHE PATENTANMELDUNG

(11) **EP 1 054 192 A1**
(43) Veröffentlichungstag der Anmeldung: **22.11.2000**
(21) Anmeldenummer: 00110395.1
(22) Anmeldetag: 16.05.2000
(51) Int. Cl.: F16H 61/00, F16H 57/04

(54) **Getriebebaueinheit und Vorrichtung zur elektronischen Steuerung einer Getriebebaueinheit**

(30) Priorität: 19.05.1999 DE 19923023
(71) Anmelder: Voith Turbo GmbH & Co. KG, 89522 Heidenheim (DE)
(72) Erfinder: Dietzel, Bernd, 89428 Syrgenstein (DE); Nitsche, Martin, 89547 Gerstetten (DE)
(74) Vertreter: Koch, Annegret Christa

(57) **Zusammenfassung**

Die Erfindung betrifft eine Getriebebaueinheit mit einem Getriebegehäuse und einer, dieser zugeordneten Steuervorrichtung, umfassend wenigstens eine Steuereinrichtung.

Erfindungsgemäß ist die Steuereinrichtung im Getriebegehäuse angeordnet.

## Beschreibung

Die Erfindung betrifft eine Getriebebaueinheit, im einzelnen mit den Merkmalen aus dem Oberbegriff des Anspruchs 1. Ferner eine Vorrichtung zur elektronischen Steuerung einer Getriebebaueinheit, insbesondere Getriebesteuervorrichtung.

Getriebebaueinheiten, bei welchen der Wechsel zwischen den einzelnen Gangstufen in bestimmten Fahrzuständen automatisch in Abhängigkeit von dem aktuellen Fahrerwunsch und/oder den aktuellen Fahrzustand wenigstens mittelbar beschreibenden Größen erfolgt, sind in einer Vielzahl von Ausführungen bekannt. Diese sind beispielsweise als Wandlergetriebe, umfassend wenigstens einen hydrodynamischen Wandler und mechanische Drehzahl-/Drehmomentenwandlungseinrichtungen, wie beispielsweise in der Druckschrift Voith: "Hydrodynamik in der Antriebstechnik", Vereinigte Fachverlage, Krauskopf Ingenieur Digest, Mainz 1987, Seite 151 bis 195 beschrieben, ausgeführt. Zur optimalen Anpassung des Übertragungsverhaltens ist der Getriebebaueinheit eine Steuervorrichtung zur elektronischen Ansteuerung der einzelnen Drehzahl-/Drehmomentenwandlungseinrichtungen zugeordnet. Entsprechend den Ausführungen des Standes der Technik wird diese getrennt vom Gehäuse des Automatikgetriebes im Fahrzeug angeordnet. Da üblicherweise die Gehäuse der Getriebebaueinheit und der Steuervorrichtung an unterschiedlichen Orten hergestellt werden und erst während des Zusammenbaus im Fahrzeug miteinander in Wirkverbindung gebracht werden, werden jeweils willkürlich ausgewählte Getriebebaueinheiten mit einer willkürlich ausgewählten elektronischen Steuervorrichtung verbunden. Selbst wenn Gangübersetzungs-Umschaltkennlinien eine gewisse Änderung/oder Abweichung in ihrer Ausgangscharakteristik in Bezug auf ein Einschaltverhältnis einer Magnetspule zeigen, die zur Steuerung des Gangwechsels verwendet wird, kann es daher nicht möglich sein, diese Variationen mit Hilfe der elektronischen Steuervorrichtung zu korrigieren.

Neben derartigen, hinsichtlich der konstruktiven Ausführung autarken Getriebesteuervorrichtungen sind auch Getriebesteuervorrichtungen bekannt geworden, welche in das Fahrzeugmanagementsystem integriert wurden, wie beispielsweise in der Druckschrift EP 0 373 849 A2 beschrieben.

Nachteilig an den bekannten Getriebesteuervorrichtungen ist, daß für Getriebe gleichen Typs die Steuerungen stets identisch eingestellt waren, um beispielsweise eine leichte Tauschbarkeit zu gewährleisten, das heißt, bestimmte Toleranzen konnten nicht ausgeschlossen werden. Derartige Getriebesteuervorrichtungen waren somit nicht auf die individuell im Fahrzeug eingebaute Getriebebaueinheit abgeglichen. Werden andererseits die Getriebesteuereinrichtung auf eine Getriebebaueinheit abgeglichen, so müssen beim Getriebeaustausch die Steuerung, beispielsweise die ECU, entsprechend umprogrammiert werden. Dies ist sehr arbeitsintensiv.

Des weiteren sind die aus dem Stand der Technik bekannten Getriebesteuervorrichtungen dadurch charakterisiert, daß zur Realisierung der erforderlichen elektrischen Verbindungen, beispielsweise der elektrischen Verbindungen zwischen bestimmten, die aktuellen Fahrzustände charakterisierenden Größen erfassende Sensoren und/oder Sensoren zur Erfassung des Fahrerwunsches und/oder einer übergeordneten Steuervorrichtung und der Getriebesteuervorrichtung eine Vielzahl von Steckverbindungen und Leitungen vorzusehen sind. Aufgrund der hohen Anzahl möglicher Störstellen weisen derartige Systeme daher eine geringere Zuverlässigkeit auf.

Der Erfindung lag daher die Aufgabe zugrunde, eine Lösung für eine Getriebebaueinheit zu entwickeln, welche die zuvor aufgezeigten Nachteile vermeidet und mit welcher ein einfacher Tausch der Getriebebaueinheiten ermöglicht wird, wobei die Getriebesteuervorrichtung auf die einzelne, im Fahrzeug eingebaute Getriebebaueinheit abgestimmt bzw. abstimmbar ist.

Die erfindungsgemäße Lösung ist durch die Merkmale der Ansprüche 1 und 17 charakterisiert. Vorteilhafte Ausgestaltungen sind jeweils in den Unteransprüchen wiedergegeben.

Erfindungsgemäß wird bei einer Getriebebaueinheit, umfassend ein Getriebegehäuse und eine, dieser zugeordnete Steuervorrichtung, umfassend wenigstens eine Steuereinrichtung, d.h eine Getriebesteuereinrichtung die Steuereinrichtung im Getriebegehäuse angeordnet. Unter Steuereinrichtung soll dabei das Steuergerät bzw. eine Einheit aus elektronischen Bauelementen verstanden werden, welchem die zur Ansteuerung der Getriebebaueinheit erforderlichen Größen zugeführt und in diesem verarbeitet werden, und die aus den Eingangsgrößen entsprechend des gewünschten Ansteuervorganges zu bildenden Stellgrößen ausgegeben werden. Dieses umfaßt in der Regel eine Mehrzahl elektrischer Bauelemente, welche entsprechend der vorzunehmenden Verarbeitung der Eingangsgrößen einander zugeordnet und miteinander gekoppelt sind. Vorzugsweise sind eine Mehrzahl der elektrischen Bauelemente auf wenigstens einer Trägerplatte angeordnet und werden von einem Steuereinrichtungsgehäuse umschlossen. Dabei besteht die Möglichkeit, daß die Trägerplatte vollständig im Steuereinrichtungsgehäuse integriert ist oder aber wenigstens einen Teilwandbereich des Steuereinrichtungsgehäuses bildet.

Die erfindungsgemäße Lösung bietet den Vorteil einer erhöhten Zuverlässigkeit, da die Anzahl und Länge der zur elektrischen Kopplung erforderlichen Leitungsverbindungen gegenüber den konventionellen Lösungen erheblich geringer ist. Des weiteren wird durch die Anordnung der Steuervorrichtung in der Getriebebaueinheit eine individuelle Abstimmung der Steuervorrichtung auf die jeweilige Getriebebaueinheit möglich, ohne daß bei einem Austausch der Getriebebaueinheit eine Umprogrammierung der Steuereinrichtung vorgenommen werden muß. Die eindeutige Zuordnung von Getriebebaueinheit und elektrischer Steuervorrichtung ermöglicht die Vereinfachung der Logistik. Die bauliche Einheit von Steuervorrichtung und Getriebebaueinheit ermöglicht die Schaffung einer prüfbaren Einheit von Steuervorrichtung, Steuerhydraulik, Aktuatorik und Sensorik der Getriebebaueinheit, wobei die Steuervorrichtung bereits an die getriebespezifischen Toleranzen während des Prüfvorganges anpassbar ist.

Unter einem weiteren Aspekt der Erfindung ist der Steuervorrichtung ein Gehäuse zugeordnet, welches vorzugsweise gegen Hydraulikflüssigkeit, beispielsweise Öl und/oder eine andere Flüssigkeit dicht ausgeführt ist. Die Steuereinrichtung kann dann im Ölsumpf der Getriebebaueinheit angeordnet werden. Dadurch besteht die Möglichkeit, die elektrischen Bauelemente der Steuereinrichtung einer wenigstens indirekten Kühlung durch das im Betriebsmittel- bzw. Ölsumpf der Getriebebaueinheit befindliche Betriebsmittel. Die öldichte Ausführung des Gehäuses bedingt jedoch zur Realisierung der elektrischen Verbindung zwischen der Steuereinrichtung und den, zur Erfassung der, den aktuellen Fahrzustand wenigstens mittelbar charakterisierenden Größen und/oder des Fahrerwunsches und/oder weiterer Randbedingungen erforderlichen Sensoren der Steuervorrichtung und den mittels der Steuervorrichtung anzusteuernden Aktuatoren zur Betätigung der einzelnen Elemente der Getriebebaueinheit, beispielsweise zur Realisierung des Gangwechsels und/oder zur Vorgabe von Eingangsgrößen durch eine übergeordnete Steuer- bzw. Regelvorrichtung, eine entsprechend gestaltete Durchführung am Gehäuse. Vorzugsweise werden dabei die einzelnen Kontaktelemente beziehungsweise Leitungen in einem elektrisch nicht leitfähigen und flüssigkeitsdichtem Material eingebettet durch das Steuereinrichtungsgehäuse geführt, so daß das Eindringen von schädlichen Stoffen, wie beispielsweise Öl, verhindert wird.

Die Anordnung der Steuereinrichtung im in Einbaulage unteren Bereich der Getriebebaueinheit und das Vorsehen eines entsprechenden Gehäuses ermöglicht es, die Sensoren zur Erfassung der einzelnen, die Betriebsweise der einzelnen Elemente der Getriebebaueinheit zu einem bestimmten Zeitpunkt wenigstens mittelbar beschreibenden Größen ebenfalls im Bereich unterhalb der Getriebemittellinie, welche der Rotationsachse entspricht, anzuordnen und somit die gesamte Steuervorrichtung relativ kompakt auszuführen. Die beschriebene Anordnung im Ölsumpf, welcher in der Regel in einer Ölwanne angesammelt wird, die vom Unterteil des Getriebes gebildet wird, erlaubt es desweiteren, die Steuervorrichtung komplett mit der dazugehörigen Steuerhydraulik, der Aktuatorik zur Betätigung der einzelnen Schaltelemente und den Sensoren, welche in der Regel am Gehäuse der Ölwanne angeordnet sind, auf einfache Art und Weise zu demontieren und separat als Gesamteinheit zu prüfen.

Zur Sicherstellung der Verbindung zwischen den mit der Steuereinrichtung gekoppelten Elementen, wie Sensoren, Aktuatoren und/oder einer weiteren Steuervorrichtung erfolgt die Verbindung zwischen den einzelnen Kontakten und der Steuereinrichtung, insbesondere den auf der Trägerplatte in Form einer Elektronikplatine angeordneten elektrischen Bauelementen derart, daß diese als Federkontakte ausgeführt sind, so daß die Federn die Kontakte auf die Kontaktstellen der Elektronikplatine pressen. Alternativ können Verbindungen mittels angelöteten oder geschweißten Drähten oder in Form von steckbaren Verbindungen hergestellt werden.

Die elektrischen Verbindungen zwischen den Sensoren, Aktuatoren und der Steuereinrichtung der Getriebebaueinheit können in Form von
a) flexiblen Kabelverbindungen und/oder
b) starren Leiterbahnen, beispielsweise aus Kupfer,
ausgeführt werden. In der Regel werden dabei flexible Kabelverbindungen bevorzugt angewandt, da diese hinsichtlich der Leitungsführung einfach anpassbar sind.

Um eine thermische Überlastung der Steuervorrichtung aufgrund der Wärmeentwicklung in der Getriebebaueinheit zu verhindern, ist mit Vorteil vorgesehen, daß die elektronische Steuereinrichtung, welche im Gehäuse der Getriebebaueinheit integriert ist, wärmetechnisch von diesem entkoppelt wird, beispielsweise durch eine wärmeisolierende Zwischenschicht. Das Gehäuse der elektronischen Steuereinrichtung ist dabei beispielsweise bei Anordnung im Ölsumpf der Getriebebaueinheit zum Ölsumpf hin mit einem wärmedämmenden Medium gegen zu großen Wärmeübergang vom heißen Öl auf die elektronischen Bauelemente geschützt. Diesbezüglich besteht die Möglichkeit, entweder das Gehäuse mit einer Beschichtung aus einem wärmedämmenden Medium zu versehen oder aber Teile der Gehäusewandung aus einem wärmedämmenden Material zu fertigen.

Besonders vorteilhaft ist es des weiteren, die elektronische Steuereinrichtung nicht nur wärmetechnisch von der Getriebebaueinheit zu entkoppeln sondern auch schwingungstechnisch, beispielsweise dadurch, daß die elektronische Steuereinrichtung schwingungsgedämpft in der Getriebebaueinheit aufgehängt ist.

In einer weiteren fortgebildeten Ausführungsform sind der Steuereinrichtung Mittel zur wenigstens indirekten Abfuhr von Wärme von den elektrischen Bauelementen der Steuereinrichtung zugeordnet. Diese Mittel fungieren nach dem Prinzip der Wärmeleitung oder des Wärmeüberganges. Im erstgenannten Fall sind beispielsweise die, die elektronischen Bauelemente tragenden Trägerplatten gut wärmeleitend mit dem Boden des Gehäuses der Steuervorrichtung verbunden. Vorzugsweise wird dazu eine Verbindung gewählt, welche Wärmeleitung ermöglicht. Dies kann beispielsweise mittels einer Klebverbindung realisiert werden. Eine andere Möglichkeit der Wärmeabfuhr durch wenigstens indirekte Kühlung besteht darin, kühlmittelführende Kanäle vorzusehen, welche aufgrund des Wärmeüberganges von den elektronischen Bauelementen auf das Kühlmittel die Wärme von den elektronischen Bauelementen abführen. Bei den Kühlkanälen kann es sich dabei um separate Kanäle in Form von rohrförmigen Elementen oder Leitungen handeln. Vorzugsweise sind die Kühlkanäle jedoch direkt in die Wandung des Gehäuses der Steuereinrichtung eingearbeitet. Dabei besteht die Möglichkeit, daß beispielsweise der Boden, und/oder die Seitenwände und/oder die Oberseite des Gehäuses in Einbaulage in der Getriebebaueinheit betrachtet den Deckel eines Kühlwasserkanals beziehungsweise eines Kühlwasservorlaufes bilden. Bezüglich der Anordnung der Kühlmittelkanäle bzw. der Kühlmittelleitungen bestehen eine Vielzahl von Möglichkeiten. Diese können beispielsweise Bestandteil
a) eines der Steuervorrichtung der Getriebebaueinheit zugeordneten autarken Kühlkreislaufes
b) des der Getriebebaueinheit zugeordneten Kühlkreislaufes
c) eines, einem anderen Element im Fahrzeug zugeordneten Kühlkreislaufes
d) des Fahrzeugkühlkreislaufes
sein. Denkbar ist auch die Kopplung des separaten Kühlkreislaufes der Steuereinrichtung der Getriebebaueinheit mit anderen Kühlkreisläufen im Fahrzeug. Zur Verringerung der Bauteilanzahl und der Länge der bereitzustellenden Leitungen zum Zweck der Kühlung von einzelnen Aggregaten sind die Kühlmittelkanäle bzw. die Kühlmittelleitungen der Steuereinrichtung der Getriebebaueinheit vorzugsweise in einem ehedem vorzusehenden Kühlmittelkreislauf integriert.

Die elektronische Steuereinrichtung umfaßt wenigstens einen Eingang, welcher mit den, zur wenigstens mittelbaren Erfassung eines Ist-Wertes einer Größe für einen aktuellen Fahrerwunsch und/oder eines Fahrzustandes vorgesehenen Sensoren und/oder einer weiteren Steuervorrichtung koppelbar ist. Des weiteren ist wenigstens ein Ausgang vorgesehen, welcher mit den Aktuatoren, beispielsweise in Form der Steuerhydraulik zur Betätigung von Schaltelementen, koppelbar ist. Bei Anordnung des Gehäuses der Steuereinrichtung im Ölsumpf der Getriebebaueinheit und der öldichten Ausführung des Gehäuses der Steuereinrichtung sind entsprechende Vorrichtungen zur Durchführung von elektrischen Leitungsverbindungen beziehungsweise Kabeln vorzusehen. Die Vorrichtung zur Kabeldurchführung zur Realisierung eines Überganges von Kabeln von einem mit einem Schmier- oder Betriebsmittel oder ähnlichem wenigstens teilweise befüllten oder Rückstände enthaltenden und durch ein Gehäuse wenigstens teilweise umschlossenen Raumbereich nach außerhalb des Raumbereiches umfaßt einen aus elektrisch nicht leitfähigem Material bestehenden Isolierkörper zur Durchführung der Kabelelemente, welcher aus einem elektrisch nicht leitfähigem und gegenüber Flüssigkeiten undurchlässigen Material besteht.

Die Verbindung zwischen den elektrischen Kontakten der Verbindungsleitungen bzw. Verbindungskabel und den elektrischen Bauelementen der Steuervorrichtung erfolgt vorzugsweise derart, daß diese als Federkontakte ausgeführt sind, um auch unter Störungen einen sicheren Kontakt der Verbindungen zwischen den einzelnen Verbindungsleitungen und den elektronischen Bauelementen der elektrischen Steuereinrichtung zu realisieren.

Eine andere Ausführung besteht darin, starre Leiterbahnen, z.B. aus Kupfer zu verwenden, welche die Verbindung zwischen den Sensoren und Aktuatoren und den elektrischen Elementen der Steuereinrichtung sowie der Durchführung durch das Gehäus der Steuereinrichtung herstellen. Zur Koppelung der Getriebesteuervorrichtung mit einer weiteren zweiten Steuervorrichtung wird eine Leitungsverbindung zwischen dem Gehäuse der Steuereinrichtung der Getriebebaueinheit und dem Gehäuse der Getriebebaueinheit vorgesehen, wobei der Anschluß an die zweite Steuervorrichtung im Bereich des Getriebegehäuses angeordnet ist und vorzugsweise in Form einer einfachen Steckverbindung ausgeführt wird.

In einer weiteren fortbildenden Ausführungsform ist zum Zweck von Steuer- und Regelungsaufgaben der Steuervorrichtung eine Einrichtung zur Erfassung des atmosphärischen Luftdruckes zugeordnet, welche mit einem Eingang der elektronischen Steuereinrichtung wenigstens mittelbar koppelbar ist. Vorrichtungsmäßig kann dazu beispielsweise ein rohrförmiges Element oder ein Schacht eine Verbindung zwischen dem Getriebeinnenraum und der Getriebeumgebung herstellen. Geeignet ist gegebenenfalls auch eine Membran, welche für einen Druckausgleich zwischen dem Getriebeinnenraum und der Getriebeumgebung sorgt.

Unter einem weiteren Aspekt ist gegen das Eindringen von Öldämpfen, Feuchtigkeit und anderen schädlichen Medien in die Steuereinrichtung zur Entlüftung der Steuereinrichtung ein spezieller Deckel im Gehäuse der Steuereinrichtung vorgesehen. Zur Vermeidung des Eindringens von Feuchtigkeit besteht desweiteren die Möglichkeit, die Innenwandung des Gehäuses der Getriebesteuereinrichtung zusätzlich mit einer Membran zu versehen, welche beispielsweise aus Goretex besteht.

Besonders vorteilhaft ist es, wenn die Steuereinrichtung der Getriebebaueinheit, insbesondere die Getriebesteuervorrichtung mit der Steuervorrichtung des Fahrzeuges gekoppelt ist. In diesem Fall besteht die Möglichkeit, eine Vorrichtung zur elektronischen Steuerung einer Getriebebaueinheit derart zu schaffen, daß diese neben der elektronischen Steuereinrichtung für die Getriebebaueinheit eine weitere elektronische Steuereinrichtung für das Fahrzeugmanagement, welche in einer vorbestimmten Position im Fahrzeug entfernt von der Getriebebaueinheit angeordnet ist, umfaßt, wobei die elektronische Steuereinrichtung der Getriebebaueinheit vorzugsweise direkt im Gehäuse der Getriebebaueinheit angeordnet ist und über zumindest eine Signalleitung elektrisch mit der elektronischen Steuereinrichtung beziehungsweise einer Schnittstelle für das Fahrzeugmanagement verbindbar ist.

Zusätzlich besteht die Möglichkeit, bei Vorsehen eines hydrodynamischen Bauelementes, vorzugsweise eines hydrodynamischen Retarders in der Getriebebaueinheit oder eines Retarders außerhalb der Getriebebaueinheit, die Steuereinrichtungen von Getriebebaueinheit und Retarder miteinander zu koppeln oder die Steuereinrichtung des Retarders in die Steuereinrichtung der Getriebebaueinheit zu integrieren. In beiden Fällen besteht wiederum die Möglichkeit der Kopplung der einzelnen Steuereinrichtungen mit der Steuereinrichtung für das Fahrzeugmanagement beziehungsweise der Integration dieser Steuereinrichtungen in die Steuereinrichtung für das Fahrzeugemanagement.

Die Erfindung wird nachfolgend anhand von Figuren beispielhaft beschrieben. Es zeigen:
- Figur 1: eine Getriebebaueinheit mit einer erfindungsgemäß angeordneten Steuereinrichtung, insbesondere Getriebesteuereinrichtung im Getriebegehäuse;
- Figur 2a -2c: bevorzugte Anordnungen der elektrischen Steuereinrichtung, insbesondere der Getriebesteuereinrichtung im Ölsumpf der Getriebebaueinheit;
- Figur 3: eine erfindungsgemäße Vorrichtung zur elektronischen Steuerung einer Getriebebaueinheit mit einer ersten elektronischen Steuereinrichtung für das Fahrzeugmanagement und einer zweiten elektronischen Steuereinrichtung für die Getriebebaueinheit.

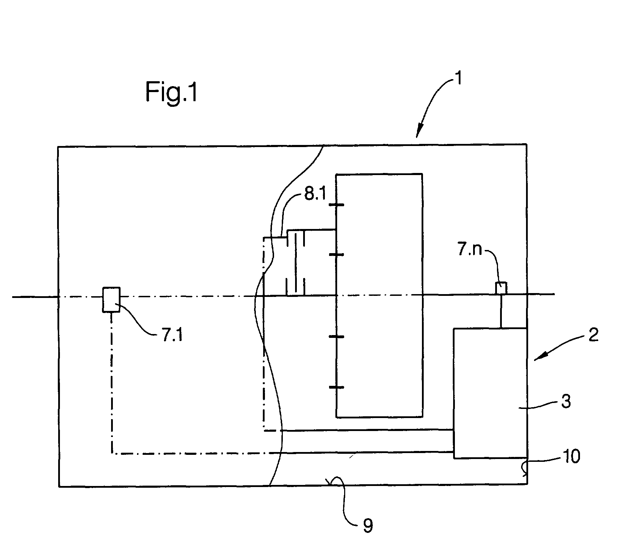

Die Figur 1 verdeutlicht in schematisch vereinfachter Darstellung eine Getriebebaueinheit 1, welcher zur Realisierung unterschiedlicher Betriebsweisen, insbesondere der einzelnen Gangwechsel eine Steuervorrichtung 2 zugeordnet ist. Die Steuervorrichtung 2 umfaßt eine Steuereinrichtung 3, welche in der Regel auch als Steuergerät bezeichnet wird. Die Steuereinrichtung 3 ist erfindungsgemäß im Gehäuse 4 der Getriebebaueinheit 1 integriert. Die Steuereinrichtung 3 weist wenigstens einen Eingang 5.1 und einen Ausgang 6.1 auf. Vorzugsweise sind eine Mehrzahl von Eingängen 5.1 bis 5.n vorgesehen, welche mit Sensoren 7.1 bis 7.n bei Integration der Getriebebaueinheit 1 in einem Fahrzeug zur wenigstens mittelbaren Erfassung einer den aktuellen Fahrzustand und/oder einen aktuellen Fahrerwunsch nach Veränderung des aktuellen Fahrzustandes wenigstens mittelbar charakterisierenden Größe koppelbar sind. Des weiteren besteht die hier nicht dargestellte Möglichkeit, einen Eingang 5.n+1 vorzusehen, welcher mit einer übergeordneten Steuervorrichtung koppelbar ist. Die Steuereinrichtung 3 verarbeitet die an den Eingängen 5.1 bis 5.n anliegenden Signale und bildet dem entsprechend die Stellsignale zur Ansteuerung der Stellelemente zur Änderung der Betriebsweise der Getriebebaueinheit. Im dargestellten Fall ist beispielhaft als Stellelement der Aktuator 8.1 dargestellt, welcher beispielsweise einzelne zur Realisierung eines Gangwechsels zu betätigende Kupplungs- und/oder Bremseinrichtungen betätigen. Bei den in der Figur 1 dargestellten Sensoren und Aktuatoren handelt es sich lediglich um Beispiele.

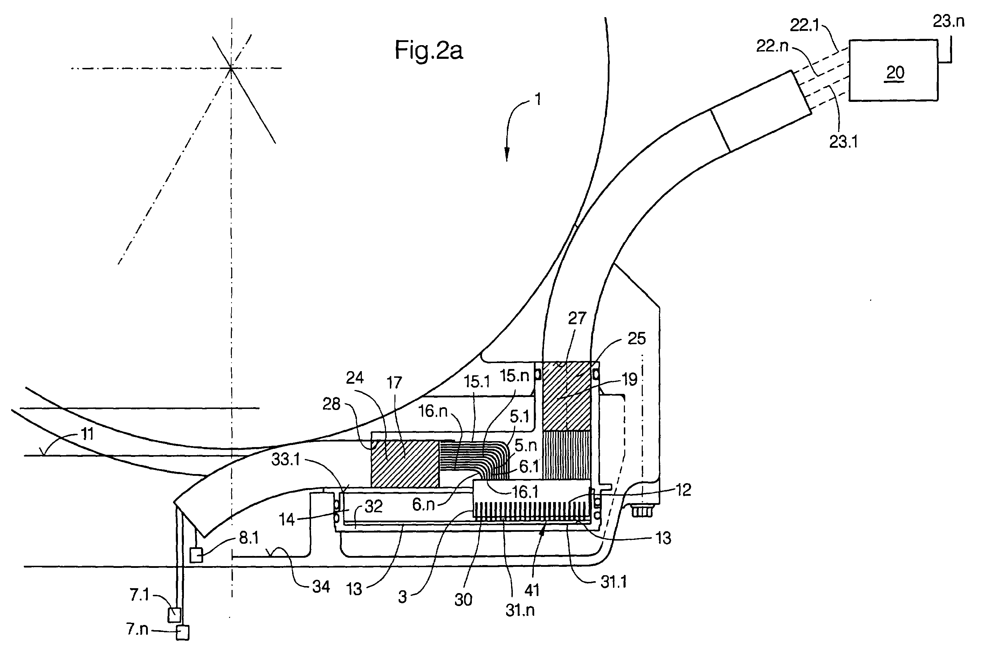

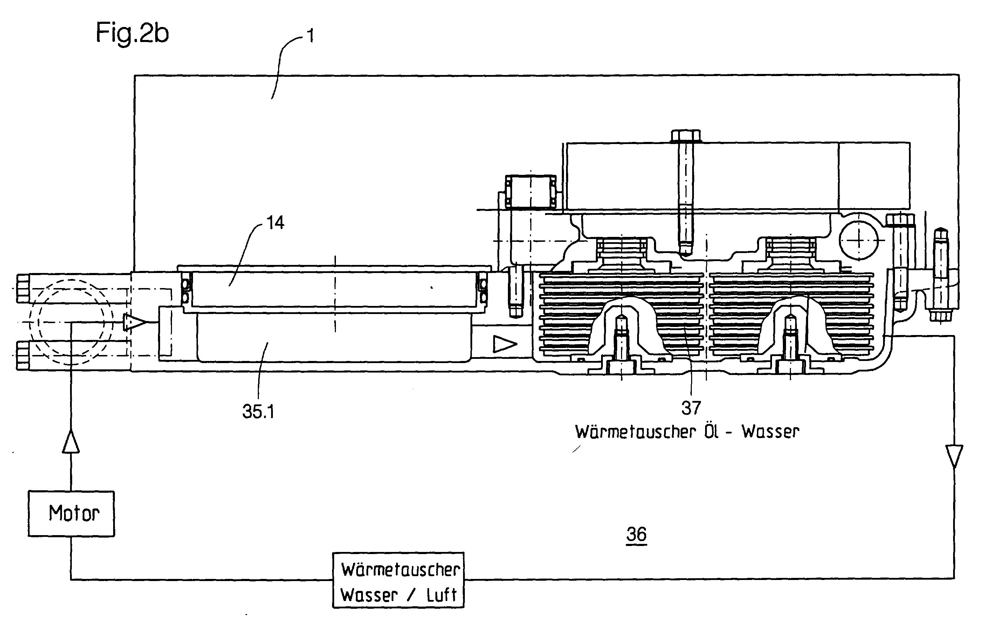

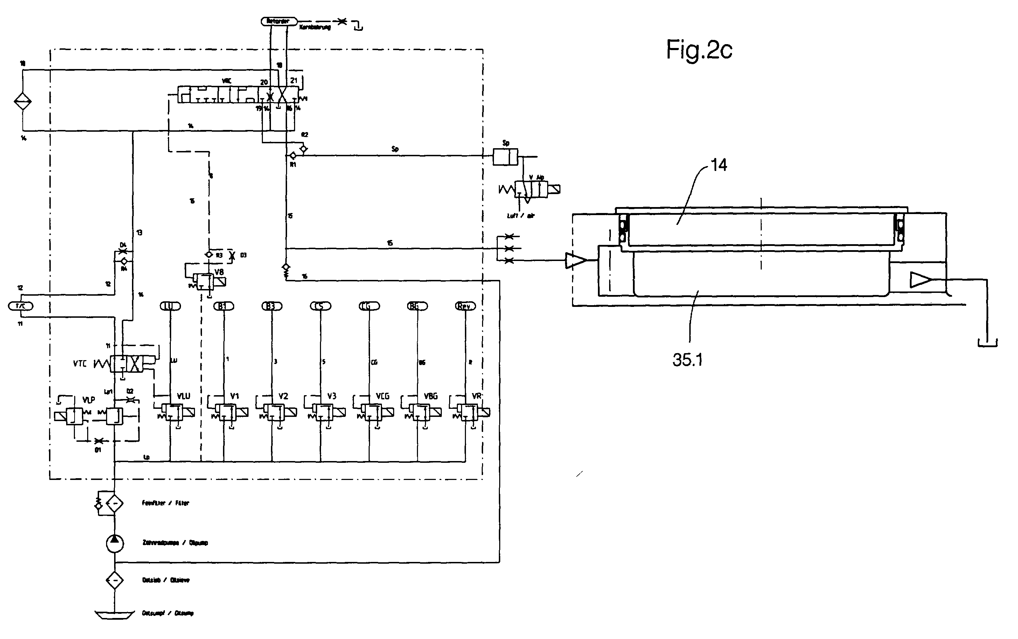

Bei der in der Figur 1 dargestellten Anordnung der Steuereinrichtung 3 an die Gehäuseinnenwandung 9 in Einbaulage der Getriebebaueinheit 1 betrachtet an einer Seitenwand 10 handelt es sich ebenfalls um ein Beispiel. Andere Anordnungsmöglichkeiten sind denkbar. Vorzugsweise wird jedoch eine Anordnung wie in der Figur 2 dargestellt, gewählt. Der grundlegende Aufbau entspricht im wesentlichen der in der Figur 1 beschriebenen, weshalb für gleiche Elemente die gleichen Bezugszeichen verwendet werden. Die Anordnung der Steuereinrichtung 3 erfolgt jedoch in Einbaulage der Getriebebaueinheit betrachtet im unteren Bereich, vorzugsweise im Ölsumpf 11 der Getriebebaueinheit. Die Steuereinrichtung 3 umfaßt eine Vielzahl von elektrischen Bauelementen 12, welche auf wenigstens einer Trägerplatte 13 angeordnet sind und die in einem separaten Gehäuse 14 integriert sind. Das Gehäuse 14 der Steuereinrichtung 3 ist dabei flüssigkeitsdicht ausgeführt. Zur Realisierung der Verbindung zwischen den Eingängen 5.1 bis 5.n der Steuereinrichtung und den Sensoren 7.1 bis 7.n beziehungsweise einer übergeordneten Fahrsteuerung und den Ausgängen 6.1 bis 6.n mit den Aktuatoren 8.1 bis 8.n sind entsprechende Leitungsverbindungen 15.1 bis 15.n für die Kopplung zwischen Sensoren 7.1 bis 7.n und den Eingängen 5.1 bis 5.n und 16.1 bis 16.n für die Kopplung zwischen den Ausgängen 6.1 und 6.n und den Aktuatoren 8.1 und 8.n vorgesehen. Diese Leitungen können als flexible Kabelverbindungen oder aber als starre Leitungen, beispielsweise in Form von Kupferleitungen ausgeführt werden. Zur Realisierung der flüssigkeitsdichten Ausgestaltung des Gehäuses 14 sind entsprechende Durchführungen 17 am Gehäuse 14 vorgesehen. Die Durchführung 17 dient dabei der Führung der Leitungsverbindungen zwischen den Sensoren 7.1 bis 7.n und den Eingängen 5.1 bis 5.n der Steuereinrichtung 3, und der Realisierung des Überganges der Leitungen 16.1 bis 16.n zur Verbindung zwischen den Ausgängen 6.1 bis 6.n mit den Aktuatoren 8.1 bis 8.n. Zusätzlich ist eine weitere Durchführung 19 vorgesehen, welche eine öldichte Durchführung der Leitungsverbindung zwischen einer übergeordneten Steuervorrichtung, vorzugsweise der Steuervorrichtung 20 zur Realisierung des Fahrzeugmanagements mit der elektronischen Steuereinrichtung 3 ermöglicht. Die Ausführung einer gemeinsamen Durchführung anstatt unterschiedlicher Durchführungen 17 und 19 ist ebenfalls denkbar. Diese Steuervorrichtung 20 umfaßt ebenfalls eine Steuereinrichtung 21 mit wenigstens einem Eingang 22.1 bis 22.n und einem Ausgang 23.1 bis 23.n, wobei wenigstens ein Ausgang 23.n mit der Steuereinrichtung 3 der Getriebebaueinheit 1 koppelbar ist. Die Dichtheit gegenüber Flüssigkeiten der Durchführung kann dabei auf unterschiedliche Art und Weise realisiert werden. Vorzugsweise werden die einzelnen Leitungen 15.1 bis 15.n beziehungsweise 16.1 bis 16.n in einem elektrisch nicht leitfähigen Material, welches gleichzeitig flüssigkeitsdicht ist, eingebettet, wobei dieses Material einen Isolierkörper 24 beziehungsweise 25 bildet, der die Zwischenräume zwischen den einzelnen Leitungen und den für die Durchführungen 17 bis 18 erforderlichen Durchgangsöffnungen 27 bis 28 ausfüllt und abdichtet. Die Steckverbindung zwischen den Verbindungsleitungen zwischen Sensoren 7.1 bis 7.n und der elektronischen Steuereinrichtung 3 beziehungsweise den Aktuatoren 8.1 bis 8.n und der elektronischen Steuereinrichtung 3 sowie der übergeordneten Steuervorrichtung 20 und der Steuereinrichtung 3 kann dabei, wie in der Figur 2 dargestellt, im Gehäuse 14 realisiert werden. Die Steuereinrichtung 3 umfaßt dazu eine Trägerplatte 30, auf welcher eine Vielzahl elektrischer Bauelemente 12 angeordnet sind. Die Trägerplatte bildet dabei eine mit elektrischen Steckkontakten 31.1 bis 31.n versehene Platine. Die einzelnen Leitungen 15.1 bis 15.n beziehungsweise 16.1 bis 16.n werden dabei im abisolierten Zustand mit den elektrischen Kontakten 31.1 bis 31.n in Wirkverbindung gebracht. Es besteht jedoch auch die hier nicht dargestellte Möglichkeit, die elektrische Verbindung bereits im Bereich der Durchführungen 17 bis 18 vorzusehen, wobei die Verbindung ebenfalls in einem Isolierkörper eingebettet ist.

Bei der in der Figur 2 dargestellten Möglichkeit sind Durchführungen 17 bis 18 zur jeweils gemeinsamen Führung der Leitungselemente zur Kopplung mit den Eingängen und den Ausgängen vorgesehen. Es besteht jedoch auch die Möglichkeit, die einzelnen Leitungsverbindungen über eine Mehrzahl von Durchführungen mit der elektronischen Steuereinrichtung 3 in Verbindung zu bringen, wobei jedoch in diesem Fall der konstruktive Aufwand erheblich erhöht wird.

Vorzugsweise ist das Trägerelement 30 wärmeleitend mit dem Boden 32 des Gehäuses 14 verbunden. Dies wird beispielsweise mittels einer Klebverbindung realisiert. Eine weitere Möglichkeit besteht in der Zuordnung von wärmedämmendem Material zum Gehäuse 14. Dabei kann das Gehäuse 14 insbesondere im Bereich seiner zum Ölsumpf 11 hinweisenden Außenseiten, hier der Seitenflächen 33.1 bis 33.3 mit einem wärmedämmenden Material beschichtet werden. Eine andere Möglichkeit besteht darin, die Gehäusewandung aus wärmedämmendem Material zu gestalten.

Die Figur 2b verdeutlicht in schematisch vereinfachter Darstellung anhand des Gehäuses 14 der Steuereinrichtung 3.2 entsprechend der Figur 2a die Möglichkeit der Zuordnung von Mitteln zur wenigstens indirekten Wärmeabfuhr von den elektrischen Bauelementen der Steuereinrichtung 3. Zu diesem Zweck wird zwischen dem Gehäuse der Steuereinrichtung und dem benachbarten Getriebeteil ein Kühlmittelkanal 35.1 bis 35.n gebildet. Diese können, wie in der Figur 2b schematisch vereinfacht dargestellt, im Kühlkreislauf 36 des Fahrzeuges bei Integration der Getriebebaueinheit 1 in einem Fahrzeug integriert sein. Die Kühlmittelführungsleitungen 35.1 bis 35.n befinden sich dabei im Zulauf zu einer Kühleinrichtung oder einem Wärmetauscher 37. Dem gegenüber offenbart die Figur 2c eine Ausführung, bei welcher die Kühlmittelführungsleitungen 35.1 bis 35.n in den Wänden 34 des Gehäuses 14 in den Kühlmittelkreislauf 38 der Getriebebaueinheit 1 integriert sind. Eine andere, hier im einzelnen nicht dargestellte Möglichkeit besteht darin, der Steuereinrichtung 3 einen separaten Kühlkreislauf zuzuordnen.

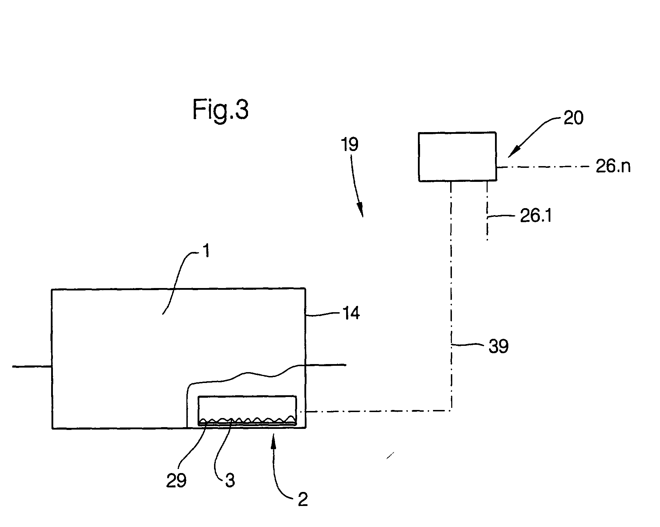

Die Figur 3 verdeutlicht in schematisch vereinfachter Darstellung bei Kopplung der elektrischen Steuervorrichtung 2 der Getriebebaueinheit mit der Steuervorrichtung 20 des Fahrzeuges die Ausgestaltung einer Vorrichtung zur elektronischen Steuerung der Getriebebaueinheit 19. In der Figur 3 ist dabei die Getriebebaueinheit 1 sowie die Steuervorrichtung 20 für das Fahrzeugmanagement, welche vorliegend als Elektronische Control Unit ausgeführt ist, dargestellt. Die ECU ist dabei im Fahrzeug entfernt von der Getriebebaueinheit 1 angeordnet.

Die Getriebebaueinheit 1 ist in beliebiger Stelle im Fahrzeug einbaubar und der Begriff umfaßt sämtliche Getriebebaueinheitenarten, welche wenigstens teilweise automatisiert betrieben werden. Erfindungsgemäß ist im Gehäuse 14 der Getriebebaueinheit 1 die zweite Steuereinrichtung 3 der Steuervorrichtung 2 der Getriebebaueinheit angeordnet. Diese ist vorzugsweise von der Getriebebaueinheit sowohl bezüglich des Wärmeübertrages wie auch der Übertragung von Schwingungen entkoppelt und zwar beispielsweise wie eingezeichnet durch eine wärmeisolierende Schicht an den Gehäusewänden sowie eine elastische Aufhängung 29 zwischen der Steuereinrichtung 3 und dem Gehäuse 4 der Getriebebaueinheit 1.

Mit der Steuervortlchtung 20, die Programme für das gesamte Fahrzeugmanagement umfassen kann, ist die Steuereinrichtung 3 über wenigstens eine Signalleitung 39 elektrisch verbunden. In einer alternativen Ausführungsform kann die zweite Steuereinrichtung für die Getriebebaueinheit statt direkt mit der Steuervorrichtung 20 zur Realisierung des Fahrzeugmanagements auch mit einer Schnittstelle, beispielsweise einem CAN-Bus für das Fahrzeugmanagement verbunden sein. Über die Verbindungsleitung 39 können die entsprechenden Steuersignale von der Steuervorrichtung 20 beziehungsweise der Schnittstelle an die Steuereinrichtung 3 übermittelt werden, ebenso wie verarbeitete Signale von der Steuereinrichtung 3 zur Steuervorrichtung 20 beziehungsweise der Schnittstelle. An der Steuervorrichtung 20 angedeutet sind weitere Signalleitungen 26.1 bis 26.n zu anderen Fahrzeugkomponenten, beispielsweise zur Antriebsmaschine oder zu anderen Bremssystemen.

Mit der vorliegenden Erfindung wird somit erstmals eine Anordnung geschaffen, mit der auf einfache Art und Weise ein Austausch der Steuereinrichtungen der Getriebebaueinheiten oder eine Umprogrammierung derselben beim Tausch der Getriebebaueinheit oder einzelner Elemente der Getriebebaueinheit entfällt.

### Bezugszeichenliste

- 1: Getriebebaueinheit
- 2: Steuervorrichtung
- 3: Steuereinrichtung
- 4: Gehäuse
- 5.1 bis 5.n: Eingänge der Steuereinrichtung 3
- 6.1 bis 6.n: Ausgänge der Steuereinrichtung 3
- 7.1 bis 7.n: Sensoren
- 8.1 bis 8.n: Aktuatoren
- 9: Gehäuseinnenwand
- 10: Seitenwand
- 11: Ölsumpf
- 12.1 bis 12.n: elektrische Bauelemente
- 13: Trägerplatte
- 14: Gehäuse
- 15.1 bis 15.n: Verbindungsleitungen
- 16.1 bis 16.n: Verbindungsleitungen
- 17.: Durchführung
- 18.: Durchführung
- 19.: Vorrichtung zur Steuerung der Getriebebaueinheit
- 20.: Steuervorrichtung
- 21.: Steuereinrichtung
- 22.1 bis 22.n: Eingänge der Steuereinrichtung 21
- 23.1 bis 23.n: Ausgänge der Steuereinrichtung 21
- 24: Isolierkörper
- 25: Isolierkörper
- 26: Verbindungsleitung
- 27: Durchgangsöffnung
- 28: Durchgangsöffnung
- 29: Aufhängung
- 30.: Trägerelement
- 31.1 bis 31.n: Elektrische Kontakte
- 32.: Boden des Gehäuses 14
- 33.1 bis 33.n: Gehäuseseiten
- 34.: Wand
- 35.1 bis 35.n: Kühlmittelführungsleitung
- 36.: Kühlkreislauf des Fahrzeuges
- 37.: Kühler beziehungsweise Wärmetauscher
- 38.: Kühlmittelkreislauf des Getriebes
- 39.: Vorrichtung zur Steuerung der Getriebebaueinheit
- 40.: Verbindungsleitung
- 41: Steckverbindung

## Patentansprüche

1. Getriebebaueinheit (1)
1.1 mit einem Getriebegehäuse (4);
1.2 mit einer Steuervorrichtung (2), umfassend wenigstens eine Steuereinrichtung (3); gekennzeichnet durch das folgende Merkmal:
1.3 die Steuereinrichtung (3) ist im Getriebegehäuse (4) angeordnet.

2. Getriebebaueinheit nach Anspruch 1, gekennzeichnet durch die folgenden Merkmale:
2.1 die Steuereinrichtung (3) umfaßt eine Mehrzahl elektrischer Bauelemente (12), welche auf wenigstens einem Trägerelement (30) angeordnet sind;
2.2 die Steuereinrichtung (3) umfaßt ein Gehäuse (14).

3. Getriebebaueinheit nach Anspruch 2, gekennzeichnet durch die folgenden Merkmale:
3.1 das Gehäuse (14) der Steuereinrichtung (3) ist flüssigkeitsbeziehungsweise öldicht ausgeführt;
3.2 die Steuereinrichtung (3) ist im Ölsumpf (11) der Getriebebaueinheit angeordnet.

4. Getriebebaueinheit nach einem der Ansprüche 2 oder 3, dadurch gekennzeichnet, daß Mittel zur wärmetechnischen Entkopplung der elektrischen Bauelemente (12) der Steuereinrichtung (3) von den Elementen der Getriebebaueinheit (1) und/oder dem Ölsumpf (11) vorgesehen sind.

5. Getriebebaueinheit nach Anspruch 4, dadurch gekennzeichnet, daß die Mittel wenigstens eine Beschichtung des Gehäuses (14) mit wärmedämmendes Material umfassen.

6. Getriebebaueinheit nach einem der Ansprüche 1 bis 5, dadurch gekennzeichnet, daß Mittel zur wenigstens indirekten Kühlung der elektronischen Bauelemente (12) der Steuereinrichtung (3) vorgesehen sind.

7. Getriebebaueinheit nach Anspruch 6, dadurch gekennzeichnet, daß die Mittel eine wärmeleitende Verbindung zwischen dem Trägerelement (30) und der Gehäusewand (34) des Gehäuses (14) der Steuereinrichtung (3) aufweisen.

8. Getriebebaueinheit nach Anspruch 7, dadurch gekennzeichnet, daß die wärmeleitende Verbindung als Klebverbindung zwischen Trägerelement (30) und Gehäusewand (34) ausgeführt ist.

9. Getriebebaueinheit nach einem der Ansprüche 6 bis 8, dadurch gekennzeichnet, daß die Mittel der Steuereinrichtung (3) zugeordnete Kühlkanäle umfassen.

10. Getriebebaueinheit nach Anspruch 9, dadurch gekennzeichnet, daß die Kühlkanäle in der Gehäusewand (34) des Gehäuses (14) angeordnet sind.

11. Getriebebaueinheit nach einem der Ansprüche 9 oder 10, dadurch gekennzeichnet, daß die Kühlkanäle mit dem Kühlkreislauf (36) des Fahrzeuges verbunden sind.

12. Getriebebaueinheit nach einem der Ansprüche 9 bis 11, dadurch gekennzeichnet, daß die Kühlkanäle mit dem Kühlkreislauf (38) der Getriebebaueinheit (1) gekoppelt sind.

13. Getriebebaueinheit nach einem der Ansprüche 1 bis 12, gekennzeichnet durch die folgenden Merkmale:
13.1 die Steuereinrichtung (3) weist eine Vielzahl von Eingängen (5.1 bis 5.n) und wenigstens einen Ausgang (6.1 bis 6.n) auf;
13.2 die Eingänge (5.1 bis 5.n) der Steuereinrichtung (3) sind wenigstens mittelbar mit Sensoren (7.1 bis 7.n) zur Erfassung einer, den aktuellen Fahrzustand oder einen Fahrerwunsch nach Änderung der Betriebsweise wenigstens mittelbar charakterisierenden Größe und/oder einer übergeordneten Steuervorrichtung (20) gekoppelt;
13.3 die Ausgänge (6.1 bis 6.n) der Steuereinrichtung (3) sind wenigstens mittelbar mit Aktuatoren (8.1 bis 8.n) zur Änderung der Betriebsweise der Getriebebaueinheit koppelbar;
13.4 zur Realisierung der Verbindung zwischen den Sensoren (7.1 bis 7.n) und der Steuereinrichtung (3), den Aktuatoren (8.1 bis 8.n) und der Steuereinrichtung (3) und/oder einer weiteren Steuervorrichtung (20) und der Steuereinrichtung (3) der Getriebebaueinheit sind im Gehäuse (14) der Steuereinrichtung (3) mindestens eine oder mehrere Durchführungen (17, 18) vorgesehen.

14. Getriebebaueinheit nach Anspruch 13, dadurch gekennzeichnet, daß die elektrische Verbindung zwischen den Sensoren (7.1 bis 7.n), den Aktuatoren (8.1 bis 8.n) und/oder der weiteren Steuervorrichtung (20) und der Steuereinrichtung (3) durch Kopplung der elektrischen Kontakte im Gehäuse (14) der Steuereinrichtung (3) hergestellt wird;
14.1 die Verbindungsleitungen (15.1 bis 15.n), (16.1 bis 16.n) werden durch Durchgangsöffnungen (27, 28) in der Gehäusewand (34) der Steuereinrichtung (3) geführt, wobei zwischen den Verbindungsleitungen und der Gehäusewand (34) jeweils ein Isolierkörper (24, 25) vorgesehen ist.

15. Getriebebaueinheit nach einem der Ansprüche 1 bis 14, dadurch gekennzeichnet, daß die Steuereinrichtung (3) der Getriebebaueinheit mit einer weiteren Steuervorrichtung (20), welche zur Realisierung des Fahrzeugmanagements eingesetzt wird, koppelbar ist.

16. Getriebebaueinheit nach einem der Ansprüche 1 bis 15, dadurch gekennzeichnet, daß die Steuereinrichtung (3) schwingungstechnisch von der Getriebebaueinheit entkoppelt ist.

17. Vorrichtung zur elektronischen Steuerung einer Getriebebaueinheit, insbesondere Getriebesteuerung mit
17.1 einer elektronischen Steuervorrichtung für das Fahrzeugmanagement (20), die
17.2 in einer vorbestimmten Position im Fahrzeug entfernt von der Getriebebaueinheit (1) angeordnet ist, und
17.3 einer weiteren elektronischen Steuervorrichtung, umfassend eine elektronische Steuereinrichtung (3) für die Getriebebaueinheit (1), dadurch gekennzeichnet, daß
17.4 die elektronische Steuereinrichtung (3) der Getriebebaueinheit (1) im Gehäuse (4) der Getriebebaueinheit (1) angeordnet ist und
17.5 über zumindest eine Signalleitung (39) elektrisch mit der elektronischen Steuereinrichtung (21) beziehungsweise einer Schnittstelle für das Fahrzeugmanagement verbunden sind.

18. Vorrichtung nach Anspruch 17 für eine Getriebebaueinheit gemäß einem der Ansprüche 1 bis 16.
